# EUROPÄISCHE PATENTSCHRIFT

(11) **EP 1 316 135 B1**
(45) Veröffentlichungstag und Bekanntmachung des Hinweises auf die Patenterteilung: **04.05.2005**
(21) Anmeldenummer: 01943126.1
(22) Anmeldetag: 23.05.2001
(51) Int. Cl.: H02K 1/18, H02K 15/02, H02K 15/14

(54) **VORRICHTUNG MIT EINEM STATOR UND EINER HÜLSE**
DEVICE WITH A STATOR AND A SLEEVE
DISPOSITIF COMPRENANT UN STATOR ET UNE DOUILLE

(30) Priorität: 25.05.2000 DE 10026009
(43) Veröffentlichungstag der Anmeldung: 04.06.2003
(73) Patentinhaber: ROBERT BOSCH GMBH, 70442 Stuttgart (DE)
(72) Erfinder: EGGERS, Wolf-Joachim, 76131 Karlsruhe (DE); PFETZER, Johannes, 77815 Buehl (DE)
(86) Internationale Anmeldenummer: PCT/DE2001/001934
(87) Internationale Veröffentlichungsnummer: WO 2001/091267

(56) Entgegenhaltungen:
- EP-A- 0 855 511
- DE-A- 3 716 771
- DE-A- 3 905 997
- FR-A- 2 579 841

## Beschreibung

### Stand der Technik

Die Erfindung geht aus von einer Vorrichtung mit einem Stator und einer Hülse nach der Gattung des Anspruchs 1.

Aus der DE 37 16 771 A1 ist eine Vorrichtung mit einem Stator und mit einer auf dem Stator zumindest teilweise aufliegender Hülse, insbesondere für einen Elektromotor, bekannt. Die Außenseite des Stators und die Innenseite der Hülse weisen miteinander korrespondierende sägezahnartige Konturen auf, die ein berührungsfreies Ineinanderschieben des Stators und der Hülse ermöglichen. Die in radialer Richtung benachbarten Flanken der beiden sägezahnartigen Konturen haben gleiche Steilheit, so dass nach dem Ineinanderschieben des Ständerblechpaketes und des Ringes und Relativverdrehung die Flanken mit Flächenberührung aneinanderliegen. Die dabei zwischen den in tangentialer Richtung benachbarten Flanken der sägezahnartigen Konturen frei werdenden Zwischenräume werden mit einer Vergussmasse ausgefüllt.

Aus der GB 2303744 A1 oder der GB 1401243 A1 ist bekannt, dass ein Stator mittels Wärmepassung oder Schrumpfpassung in einem Gehäuse befestigt wird. Dieses Verfahren ist jedoch aufwändig, weil das Gehäuse aufgeheizt werden muss und sich die Verbindung von Stator und Gehäuse während einer Erwärmung des Gehäuses im Einsatz wieder lösen kann.

Die FR 2726700 A 1 zeigt schon, wie ein Bajonettverschluss benutzt wird, um ein Bürstenhaltergehäuse an einem Stator zu befestigen. Dieses Bürstenhaltergehäuse umschließt den Stator aber nicht.

Bekannt ist ebenfalls aus der US-PS 4,992,686, dass ein Stator mittels Bajonettverschluss in einem Gehäuse in axialer Richtung befestigt ist. Jedoch bilden hier nicht Aussengehäuse und Stator den Bajonettverschluss, sondern ein zusätzliches Element und das Gehäuse. Dieses zusätzliches Element wird in das Gehäuse axial hineindrückt sowie darin verdreht und befestigt dadurch den Stator im Gehäuse.

### Vorteile der Erfindung

Die erfindungsgemässe Vorrichtung mit einem Stator und einer Hülse mit den kennzeichnenden Merkmalen des Anspruchs 1 hat demgegenüber den Vorteil, dass auf einfache Art und Weise eine Hülse auf einem Stator befestigbar ist.

Durch die in den abhängigen Ansprüchen aufgeführten Massnahmen sind vorteilhafte Weiterbildungen und Verbesserungen der im Anspruch 1 genannten Vorrichtung möglich.

Eine vorteilhafte Ausbildung eines Bajonettverschlusses besteht darin, dass der Bajonettverschluss durch Kraftschluss gebildet ist.

Für die magnetischen Eigenschaften des Stators ist es vorteilhaft, wenn der Stator aus zumindest einem Blechlaminatstapel besteht.

Ebenso kann es für die magnetischen Eigenschaften der Hülse vorteilhaft sein, wenn es aus zumindest einem Blechlaminatstapel besteht.

Eine vorteilhafte Verwendung der Hülse besteht darin, dass es ein magnetisches Rückschlusselement bildet.

Weiterhin vorteilhaft ist es, wenn der Stator eine zumindest teilweise vorhandene Kunststoffummantelung hat, die auch mit der Hülse einen Bajonettverschluss bilden kann.

### Zeichnung

Ein Ausführungsbeispiel der Erfindung ist in der Zeichnung vereinfacht dargestellt und in der nachfolgenden Beschreibung näher erläutert.

### Es zeigen

Figur 1 eine erfindungsgemäße Vorrichtung mit einem Stator und einer Hül se,
Figur 2 einen Statorpolzahn,
Figur 3a, 3b einen Ausschnitt der Vorrichtung aus Figur 1 mit einem Stator und einer Hülse im offenen und verschlossenen Zustand eines Bajonettverschlusses.

### Beschreibung des Ausführungsbeispiels

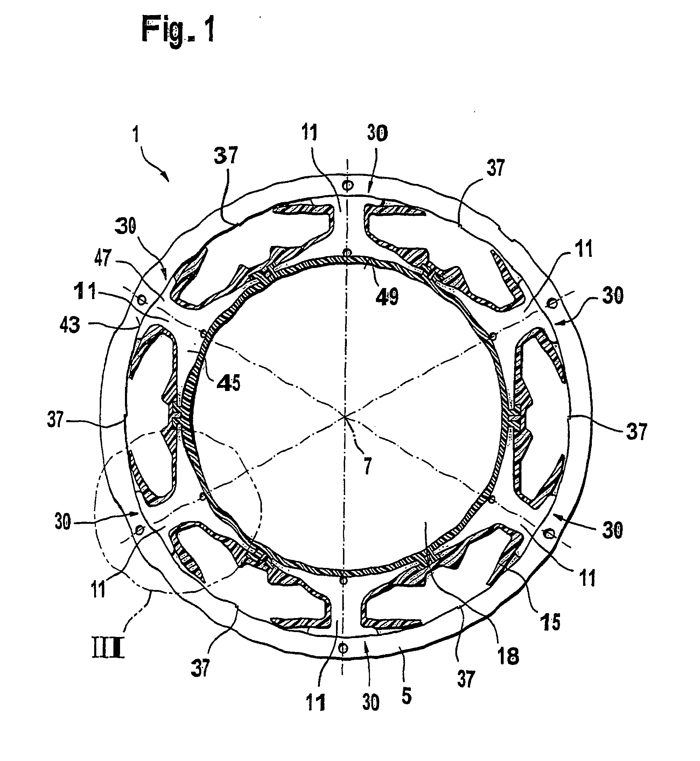

Figur 1 zeigt eine Vorrichtung mit einem erfindungsgemäß ausgebildeten Stator 1 und einer erfindungsgemäß ausgebildeten Hülse 5, wie sie beispielsweise in einem Elektromotor Verwendung findet.
Die Vorrichtung mit Stator 1 und Hülse 5 hat eine Mittelachse 7. Um die Mittelachse 7 sind beispielsweise sechs Statorpolzähne 11 beispielsweise gleichmässig verteilt. Der Stator 1 kann aus einem massiven Material bestehen, oder beispielsweise aus einem Blechlaminatstapel, der aus zumindest einem Blechlaminat gebildet ist.
In diesem Ausführungsbeispiel bildet jeder Statorpolzahn 11 einen Blechlaminatstapel, d.h. es gibt sechs separate Blechlaminatstapel, die als einzelne Statorpolzähne 11 nicht magnetisch leitend miteinander verbunden sind.
Der Stator 1 hat bspw. eine zumindest teilweise vorhandene Kunststoffummantelung 15, die in diesem Ausführungsbeispiel die einzelnen Statorpolzähne 11 trägt und zusammenhält. Besteht der Stator 1, der magnetisch leitend miteinander verbundene Statorzähne 11 aufweist, aus einem Blechlaminatstapel oder aus einem massiven Material, so kann trotzdem eine Kunststoffummantelung vorhanden sein, beispielsweise um den Stator 1 vor Korrosion zu schützen, oder um einen wasserdichten Innenkanal 18 zu bilden.
Die Hülse 5 kann ebenfalls aus Massivmaterial bestehen oder aus zumindest einem Blechlaminatstapel. Wenn die Hülse 5 aus einem weichmagnetischem Material besteht, kann es auch als magnetisches Rückschlusselement dienen. Um die Mittelachse 7 ist beispielsweise ein Rotor angeordnet (nicht gezeigt), der u.a. mit dem Stator 1 einen Elektromotor bildet. Ein derariger Rotor ist beispielsweise in der GB 2303744 A1 gezeigt.

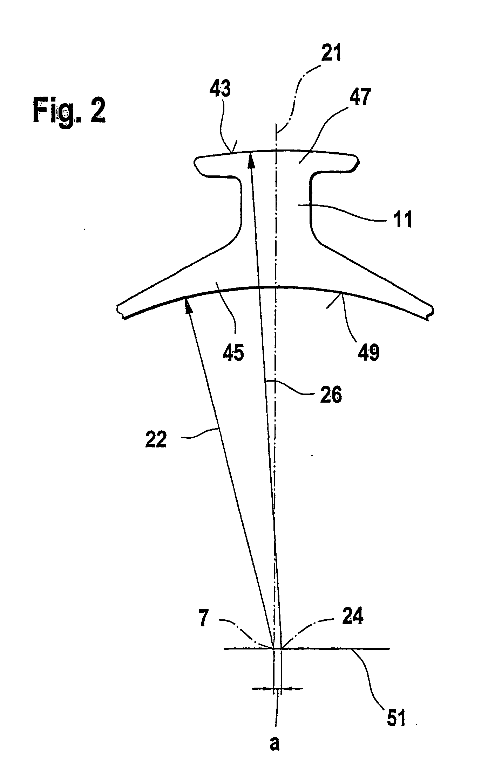

Figur 2 zeigt einen Statorpolzahn 11.
Der Statorpolzahn 11 hat einen Polfuss 45, einen Polkopf 47 sowie eine Polzahnachse 21, die durch die Mittelachse 7 verläuft. Ein eine Polfussinnenfläche 49 bildender Innenradius 22 am gewölbt ausgebildeten Polfuss 45 des Statorpolzahns 11 verläuft ebenfalls durch die Mittelachse 7. Ein Aussenradius 26 am gewölbt ausgebildeten Polkopf 47 des Statorpolzahns 11 geht von einer parallel zur Mittelachse 7 verlaufenden versetzten Achse 24 aus. Die versetzte Achse 24 ist um einen Abstand a bspw. entlang einer zu der Polzahnachse 21 senkrechten in der Zeichnungsebene verlaufenden Linie 51 gegenüber der Mittelachse 7 versetzt. Dadurch entstehen an jedem Polkopf 47 der Statorpolzähne 11 gegenüber der Polfussinnenfläche 49 versetzt gewölbte Aussenflächen 43, auf die sich die Hülse 5 in einer Drehlage mit Spiel fügen lässt. Wird die Hülse 5 dann gegenüber den Statorpolzähnen 11 verdreht, so verklemmt sich die Hülse 5 dann infolge Formschluss mit der Wirkung eines Baj onettverschlusses 30 an den Statorpolzähnen 11, wobei kleine Fertigungstoleranzen ausgeglichen werden.

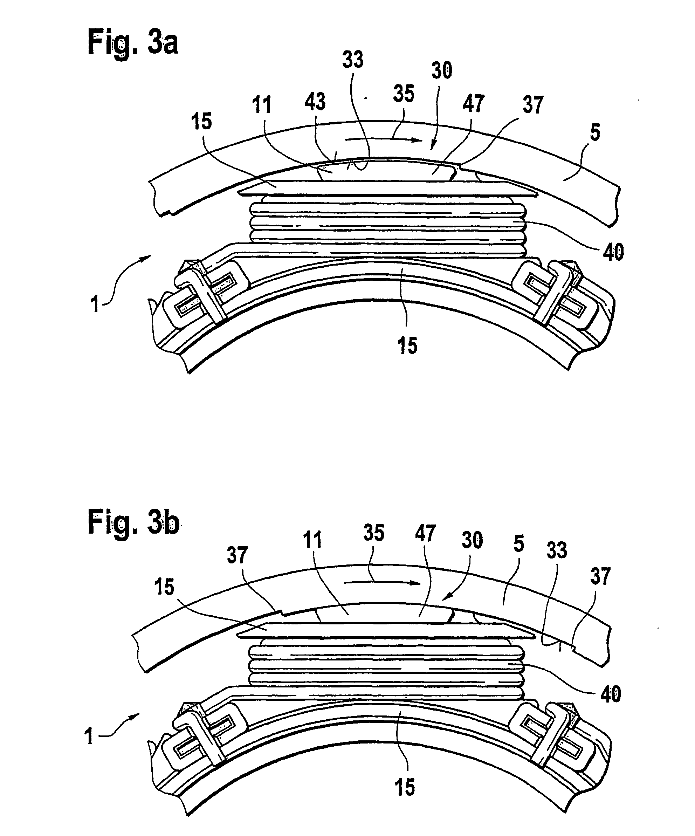

Figur 3a zeigt einen Stator 1 mit einer Hülse 5 in einer Stellung des Bajonettverschlusses 30 im offenen Zustand und Figur 3b in einer Stellung des Bajonettverschlusses 30 im geschlossenen Zustand.
Die Hülse 5 hat bspw. an seiner Innenfläche 33 zumindest einen Absatz 37. Der Absatz 37 ist beispielsweise ent sprechend der Statorpolzähneanzahl wiederholt in gleichmässigem Abstand in Umlaufsrichtung auf der Innenfläche 33 der Hülse 5 vorhanden. Die Innenfläche 33 der Hülse 5 ist in der Nähe jedes Absatzes 37 so ausgebildet, dass der Abstand zur Mittelachse 7 ausreicht, um in dieser Stellung die Hülse 5 über den Stator 1 mit seinen Statorpolzähnen 11 zu schieben. In einer der hier in Uhrzeigerichtung angegebenen Schließrichtung 35 entgegengesetzten Umlaufsrichtung ist die Innenfläche 33 so ausgebildet, dass sich ihr Abstand zur Mittelachse 7 verkleinert, so dass, wenn die Hülse 5 in Schließrichtung 35 gedreht wird, die Hülse 5 sich mit wenigstens einem Statorpolzahn 11 oder mit der bis zum Polkopf 47 reichenden Kunststoffummantelung 15 verklemmt und in Kraftschluss gelangt, wodurch ein Bajonettverschluss 30 gebildet wird.

Es ist nicht notwendig, dass jeder Statorpolzahn 11 mit der Hülse 5 in Form eines Bajonettverschlusses 30 in Berührung gelangt.

Die Kunststoffummantelung 15 kann auch so ausgebildt sein, dass sie mit der Hülse 5 den Bajonettverschluss 30 bildet, und/oder sie kann auch bspw. als ein Spulenkörper für eine Spule 40 geformt sein.

## Patentansprüche

1. Vorrichtung mit einem Stator (1) und mit einer auf dem Stator zumindest teilweise aufliegenden Hülse (5), insbesondere für einen Elektromotor, wobei, die Hülse (5) und der Stator (1) miteinander einen Bajonettverschluss (30) bilden, wobei die Hülse (5) an ihrer Innenfläche (33) zumindest einen Absatz (37) hat, der entsprechend der Statorpolzähneanzahl wiederholt in gleichmäßigem Abstand in Umlaufsrichtung auf der Innenfläche (33) der Hülse (5) vorhanden ist, wobei die Innenfläche (33) der Hülse (5) in der Nähe jedes Absatzes (37) so ausgebildet ist, dass der Abstand zur Mittelachse (7) des Stators (1) ausreicht, um in dieser Stellung die Hülse (5) über den Stator (1) mit seinen Statorpolzähnen (11) zu schieben, wobei in einer der Schließrichtung (35) entgegen gesetzten Umlaufsrichtung die Innenfläche (33) so ausgebildet ist, dass sich ihr Abstand zur Mittelachse (7) verkleinert, sodass, wenn die Hülse (5) in Schließrichtung (35) gedreht wird, die Hülse (5) sich mit wenigstens einem Statorpolzahn (11) oder mit einer bis zu einem Polkopf (47) des Statorpolzahns (11) reichenden Kunststoffummantelung (15) verklemmt und in Kraftschluss gelangt, wodurch der Bajonettverschluss (30) gebildet wird.

2. Vorrichtung nach Anspruch 1, wobei
der Bajonettverschluss (30) durch Kraftschluss gebildet ist.

3. Vorrichtung nach Anspruch 1, wobei
die Hülse (5) eine Mittelachse (7) und eine Innenfläche (33) mit zumindest einem Absatz (37) hat,
und ausgehend vom Absatz (37) sich ein Abstand zwischen der Innenfläche (33) und der Mittelachse (7) in einer Umfangsrichtung verkleinert und in der entgegengesetzten Umfangsrichtung der Hülse (5) sich vergrössert.

4. Vorrichtung nach Anspruch 1 wobei,
der Stator (1) aus zumindest einem Blechlaminatstapel besteht.

5. Vorrichtung nach Anspruch 1 oder 3, wobei
die Hülse (5) ein magnetisches Rückschlusselement ist.

6. Vorrichtung nach einem oder mehreren der Ansprüche 1, 3 oder 5, wobei
die Hülse (5) aus zumindest einem Blechlaminatstapel besteht.

## Claims

1. Device having a stator (1) and having a sleeve (5), which rests at least partially on the stator, in particular for an electric motor, the sleeve (5) and the stator (1) forming with one another a bayonet fitting (30), the sleeve (5) having on its inner face (33) at least one step (37), which is provided, corresponding to the number of stator pole teeth, repeatedly at an equal spacing in the circumferential direction on the inner face (33) of the sleeve (5), the inner face (33) of the sleeve (5) being formed in the vicinity of each step (37) such that the spacing from the central axis (7) of the stator (1) is sufficient for, in this position, the sleeve (5) to be pushed over the stator (1) with its stator pole teeth (11), the inner face (33) being formed in a circumferential direction, which is opposite to the locking direction (35), such that its spacing from the central axis (7) decreases in size, with the result that, when the sleeve (5) is rotated in the locking direction (35), the sleeve (5) becomes stuck and forms a force-fitting connection with at least one stator pole tooth (11) or with a plastic sheathing (15) which reaches up to a pole head (47) of the stator pole tooth (11), so as to form the bayonet fitting (30).

2. Device according to Claim 1, the bayonet fitting (30) being formed by a force-fitting connection.

3. Device according to Claim 1, the sleeve (5) having a central axis (7) and an inner face (33) having at least one step (37), and, starting from the step (37), a spacing between the inner face (33) and the central axis (7) decreasing in size in one circumferential direction and increasing in size in the opposite circumferential direction of the sleeve (5).

4. Device according to Claim 1, the stator (1) comprising at least one laminate core.

5. Device according to Claim 1 or 3, the sleeve (5) being a magnetic return element.

6. Device according to one or more of Claims 1, 3 or 5, the sleeve (5) comprising at least one laminate core.

## Revendications

1. Dispositif comprenant un stator (1) et une douille (5) posée au moins en partie sur le stator, notamment pour un moteur électrique,
dans lequel :
- la douille (5) et le stator (1) forment ensemble un emboîtement à baïonnette (30),
- la douille (5) sur sa face interne (33) possède au moins un gradin (37) qui, en correspondance avec le nombre des dents de pôle de stator, est reproduit avec un espacement régulier sur la périphérie de la face interne (33) de la douille (5),
- la face interne (33) de la douille (5), à proximité de chaque gradin (37) est constituée de manière que la distance par rapport à l'axe central (7) du stator (1) est suffisante pour que dans cette position la douille (5) glisse sur le stator (1) avec ses dents de pôle de stator (11),
- dans le sens périphérique opposé au sens de fermeture (35), la surface interne (33) est configurée de manière que sa distance par rapport à l'axe central (7) diminue, de sorte que, quand elle tourne dans le sens de fermeture (35), la douille (5) se coince avec au moins une dent de pôle de stator (11) ou avec une enveloppe en matière plastique allant jusqu'à une tête de pôle (47) de la dent de pôle de stator (11) et vient se verrouiller par force, de sorte que l'emboîtement à baïonnette (30) est réalisé.

2. Dispositif selon la revendication 1,
dans lequel
l'emboîtement à baïonnette (30) forme un verrouillage par forme.

3. Dispositif selon la revendication 1,
dans lequel
la douille (5) a un axe central (7) et une portée interne (33) avec au moins un gradin (37) et, partant de ce gradin, la distance entre la portée interne (33) et l'axe central (7) diminue selon un certain sens périphérique, tandis que dans le sens opposé, elle augmente.

4. Dispositif selon la revendication 1,
dans lequel
le stator (1) est constitué d'au moins un empilage de feuilles de tôle.

5. Dispositif selon la revendication 3,
dans lequel
la douille (5) est un élément de fermeture magnétique.

6. Dispositif selon une des revendications 1, 3 ou 5,
dans lequel
la douille (5) est constituée d'au moins un empilage de feuilles de tôle.
